(19) Europäisches Patentamt

European Patent Office

Office européen des brevets

(11) Veröffentlichungsnummer: **0 270 995 B1**

(12) **EUROPÄISCHE PATENTSCHRIFT**

(45) Veröffentlichungstag der Patentschrift: **15.07.92**

(21) Anmeldenummer: **87117860.4**

(22) Anmeldetag: **03.12.87**

(51) Int. Cl.⁵: **H02B  1/20**, H02B 1/18

(54) **Geräteadapter.**

(30) Priorität: **12.12.86 DE 3642518**

(43) Veröffentlichungstag der Anmeldung:
**15.06.88 Patentblatt  88/24**

(45) Bekanntmachung des Hinweises auf die
Patenterteilung:
**15.07.92 Patentblatt  92/29**

(84) Benannte Vertragsstaaten:
**AT CH DE FR GB IT LI NL SE**

(56) Entgegenhaltungen:
DE-A- 2 515 692
DE-A- 3 316 203
DE-A- 3 409 211
DE-B- 1 277 410
US-A- 3 458 768

(73) Patentinhaber: **Rittal-Werk Rudolf Loh GmbH &
Co. KG
Auf dem Stützelberg
W-6348 Herborn(DE)**

(72) Erfinder: **Wagener, Hans
Rittershauser Strasse 14
W-6344 Dietzhölztal 2(DE)**

(74) Vertreter: **Vogel, Georg
Pat.-Ing. Georg Vogel Hermann-
Essig-Strasse 35
W-7141 Schwieberdingen(DE)**

# Beschreibung

Die Erfindung betrifft einen Geräteadapter zum mechanischen und elektrischen Verbinden von Installationsgeräten, wie Leistungsschutzschalter, Motorschutzschalter, Schaltschütze, Relais und dgl., mit Stromsammelschienen eines Sammelschienensystems, wobei die Installationsgeräte mit einem Befestigungsfuß für genormte Tragschienen versehen sind, bei dem auf die Stromsammelschienen ein Adaptergehäuse aufsetzbar ist, in dem auf die Stromsammelschienen ausgerichtet, jeweils eine Kontaktschiene mittels eines mit einer Klemmschraube senkrecht zu den Stromsammelschienen verstellbaren Klemmkörpers festgelegt ist, wobei die Klemmschrauben von der Vorderseite des Adaptergehäuses aus betätigbar sind, bei dem mit den Klemmkörpern die Kontaktschienen mit den Stromsammelschienen mechanisch verspannbar und elektrisch leitend verbindbar sind und bei dem die Vorderseite des Adaptergehäuses einen Abschnitt einer Trägerschiene trägt.

Ein Geräteadapter dieser Art ist durch die DE-A 34 09 211 bekannt. Die Installationsgeräte werden bei diesem bekannten Geräteadapter mit der Tragschiene verbunden. Die Kontaktschienen des Geräteadapters sind als Anschlüsse für Leitungen ausgebildet, so daß sie mit den auf der Tragschiene befestigten Installationsgeräten verbunden werden können. Dieser bekannte Geräteadapter dient daher nur als Anschlußelement für Installationsgeräte, die mit den Stromsammelschienen eines Sammelschienensystems verbunden werden müssen.

Die DE-A 33 16 203 zeigt einen dreipoligen Sockel, der mit drei Aufnahmen für mittels Schraubkappen gehaltenen Sicherungen versehen ist und mit den Stromsammelschienen eines Sammelschienensystems verbunden werden kann. In den Aufnahmen sind Stützbrücken festgelegt, die über federnde Kontaktelemente mit den Stromsammelschienen verbunden werden, wenn der Sockel auf die Stromsammelschienen aufgesetzt wird. Dieser Sockel dient also nur als Sicherungshalter.

Auf der DE-A 25 15 692 ist ein Sicherungshalter bekannt, der auf Sammelschienen aufsetzbar und mittels Klemmkörpern an diesen festlegbar sind, wobei die Klemmschrauben in Gewindebohrungen der Querstege der Klemmkörper verstellbar sind und diese durchqueren und wobei die den Kontaktschienen zugekehrten freien Enden der Klemmschrauben frei drehbar sind und Kontaktschienen an den Sammelschienen verspannen.

Aus der US-A 34 58 768 ist eine Einheit bekannt, auf die ein Kilowatt-Stundenzähler aufsetzbar ist und eine Kombination aus Zugschaltern und Sicherungshaltern umfaßt, die ebenfalls auf der Einheit angeordnet ist. Die Einheit ist mit Sammelschienen verbunden.

Es ist Aufgabe der Erfindung, einen Gerätehalter der eingangs erwähnten Art zu schaffen, der sowohl als Anschlußelement für die Verbindung von auf der Tragschiene befestigten Installationsgeräten mit den Stromsammelschienen, als auch als mehrpoliger Sicherungshalter dient, wobei die Kontaktierung mit den Stromsammelschienen so verbessert ist, daß die dem Verschleiß oder der Beschädigung ausgesetzten Kontaktschienen leicht ausgetauscht werden können.

Diese Aufgabe wird nach der Erfindung dadurch gelöst, daß die Kontaktschienen als Mittelkontakt von Aufnahmen für mittels Schraubkappen gehaltene Sicherungen geführt sind, die mittels auf der Vorderseite des Adaptergehäuses befestigten Gewinderingen vervollständigt sind, daß die Tragschiene außerhalb dieser Aufnahmen mit der Vorderseite des Adaptergehäuses verbunden ist, daß das Adaptergehäuse eine Gehäuseplatte aufweist, die auf der den Stromsammelschienen zugekehrten Unterseite Befestigungsblöcke zum Anschrauben der Kontaktschienen trägt, daß die Klemmschrauben in Gewindebohrungen der Querstege der Klemmkörper verstellbar sind und diese durchqueren und daß die den Kontaktschienen zugekehrten Enden der Klemmschrauben frei drehbar, jedoch unverlierbar in Bohrungen der Kontaktschienen gehalten sind.

Die Kontaktschienen werden bei dieser Ausgestaltung als Stützbrücken für die Sicherungsaufnahmen mit verwendet, da sie leicht von dem Adaptergehäuse getrennt werden können. Mit den Klemmkörpern wird die elektrische Verbindung zwischen den Stützbrücken und den Stromsammelschienen verbessert, da beide Teile mechanisch miteinander verspannt sind. Die elektrische Verbindung kann daher ohne Funkenbildung auch große Ströme übertragen. Die auf der Tragschiene befestigten Installationsgeräte können direkt an den Ausgängen des Sicherungshalters, d.h. den Gewinderingen, angeschlossen und so abgesichert werden.

Ist dabei vorgesehen, daß der lichte Abstand der Seitenschenkel der Klemmkörper an die Breite der Kontaktschienen angepaßt ist, dann sind die Klemmkörper bei ihrer senkrecht zu den Stromsammelschienen gerichteten Verstellung unverdrehbar geführt.

Die Verstellbarkeit der Klemmkörper und ihre unverlierbare Halterung in dem Adaptergehäuse werden nach einer Ausgestaltung dadurch erhalten, daß die Klemmschrauben in Gewindebohrungen der Querstege der Klemmkörper verstellbar sind und diese durchqueren und daß die den Kontaktschienen zugekehrten Enden der Klemmschrauben frei drehbar, jedoch unverlierbar in Bohrungen der Kontaktschienen gehalten sind.

Die Aufteilung der Vorderseite des Adaptergehäuses ist nach einer Ausgestaltung so vorgenommen, daß das Adaptergehäuse quer zu den Stromsammelschienen seine Längsabmessung aufweist, daß die Kontaktschienen abgewinkelt sind und/oder seitlich versetzte Abschnitte aufweisen und mit den freien, die Mittelkontakte der Aufnahmen für mittels der Schraubkappen gehaltenen Sicherungen bildenden Enden in den einen Endbereich der Längsabmessung des Adaptergehäuses geführt sind, daß die Gewinderinge der Aufnahmen in diesem Endbereich des Adaptergehäuses seitlich angeordnet sind, und daß die Tragschiene in dem entgegengesetzten, freien Endbereich des Adaptergehäuses mit dessen Vorderseite verbunden ist und sich in Längsrichtung der Stromsammelschienen über die gesamte Breite des Adaptergehäuses erstreckt. Dann verbleibt außerhalb der Sicherungen und der Tragschiene genügend Raum für die Anordnung der Klemmschrauben für die Klemmkörper.

Da es unterschiedlich geformte und genormte Tragschienen für die verschiedenen Typen von Installationsgeräte gibt, ist eine Ausgestaltung von Vorteil, die dadurch gekennzeichnet ist, daß die Tragschiene lösbar mit der Vorderseite des Adaptergehäuses verbunden ist. Der Geräteadapter kann dann leicht an die unterschiedlichen Typen von Installationsgeräten mit den entsprechenden Befestigungsfüßen angepaßt werden. Es braucht nur ein Abschnitt der dazugehörigen Tragschiene mit dem Adaptergehäuse verbunden zu werden.

Ist nach einer Ausgestaltung vorgesehen, daß die Kontaktschienen im Bereich der Aufnahmen für die mittels der Schraubkappen gehaltenen Sicherungen mit Gewindebohrungen für einschraubbare Sicherungseinsätze versehen sind, dann lassen sich die Aufnahmen für den Einsatz bestimmter Sicherungen einstellen.

Der Anschluß der zu den Installationsgeräten führenden Verbindungsleitungen wird dadurch vereinfacht, daß die Gewinderinge mit Anschlußfahnen für abgehende Leitungen versehen sind.

Die strom- und spannungsführenden Teile des Geräteadapters werden dadurch berührungssicher abgedeckt, daß die Vorderseite des Adaptergehäuses im Endbereich mit den Aufnahmen für die mittels der Schraubkappen gehaltenen Sicherungen mittels einer Abdeckung abgedeckt ist, die den Zugang zu den Gewinderingen für die Schraubkappen freiläßt.

Eine bevorzugte Ausgestaltung sieht vor, daß die Tragschiene im Querschnitt U-förmig ausgebildet ist, wobei die freien Enden der Seitenschenkel nach außen abgewinkelt sind, und daß die abgewinkelten Enden der Seitenschenkel in Ausnehmungen im Befestigungsfuß der Installationsgeräte eingeführt und darin gehalten sind. Diese Schnellbefestigung für die Installationsgeräte hat sich in der Praxis schon seit Jahren bewährt und kann in gleicher Weise auch bei der mechanischen Verbindung der Installationsgeräte mit dem Geräteadapter verwendet werden.

Die Erfindung wird anhand eines in den Zeichnungen dargestellten Ausführungsbeispiels näher erläutert. Es zeigt:

Fig. 1 im Schnitt entlang der Linie I-I der Fig. 2 einen mit den Stromsammelschienen eines Sammelschienensystems verbundenen Geräteadapter mit den Zusatzteilen, wie Abdeckung, Schraubkappen und Installationsgerät,

Fig. 2 den Geräteadapter nach Fig. 1 ohne Abdeckung und Schraubkappen, auf die Vorderseite gesehen, und

Fig. 3 die Vorderansicht des auf den Stromsammelschienen montierten und mit Abdeckung und Schraubkappen vervollständigten Geräteadapter.

Bei dem Ausführungsbeispiel handelt es sich um ein dreiphasiges Sammelschienensystem mit den drei Stromsammelschienen 25, 26 und 27, die in vorgegebenem Abstand parallel zueinander verlaufend in Sammelschienenhaltern gehalten und im Abstand von einer Befestigungswand im Schaltschrank oder dgl. gehalten sind. Der Geräteadapter umfaßt ein Adaptergehäuse 10, das mit seiner Längsabmessung quer zu den Stromsammelschienen 25, 26 und 27 gerichtet ist und die äußeren Stromsammelschienen 25 und 27 außen umgreift. Das Adaptergehäuse 10 weist eine Gehäuseplatte 11 auf, auf deren Unterseite die Befestigungsblökke 12, 13 und 14 angeformt sind. An diesen Befestigungsblöcken 12, 13 und 14 sind mittels Schrauben 29 die drei Kontaktschienen 28, 35 und 36 befestigt und zwar so, daß sie von der Unterseite her zugänglich sind und mit voneinander isolierten Teilbereichen auf die Stromsammelschienen 25, 26 und 27 ausgerichtet sind. An jeder Kontaktschiene 28, 35 und 36 ist eine Klemmschraube 30, 33 bzw. 34 frei drehbar und unverlierbar gehalten, wie an dem Ende 32 der Klemmschraube 30 gezeigt ist.

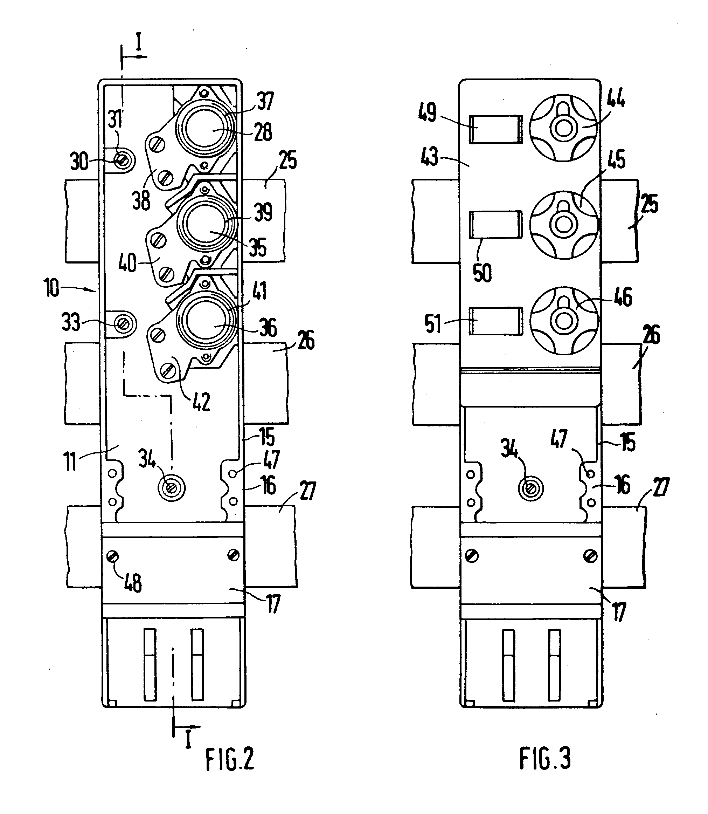

Die Klemmschrauben 30, 33 und 34 sind durch den Quersteg 20 von den U-förmigen Klemmkörpern 19, 23 und 24 geführt und können in einer Gewindebohrung desselben verstellt werden. Dabei sind die Klemmschrauben 30, 33 und 34 von der Vorderseite des Adaptergehäuses 10 aus zugänglich und betätigbar, wie die Draufsicht nach Fig. 2 zeigt.

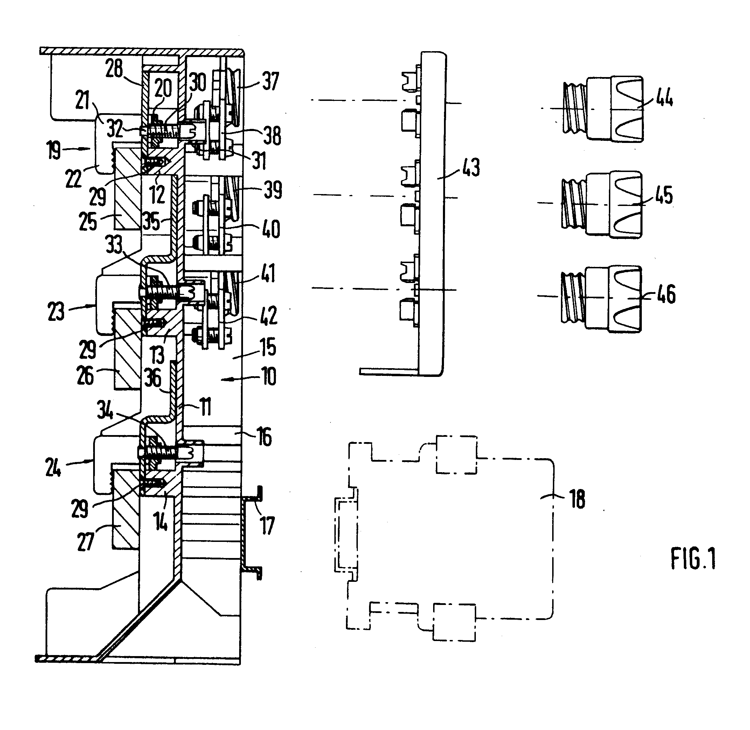

Die beiden Seitenschenkel 21 der Klemmkörper 19, 23 und 24 umgreifen die Kontaktschienen 28, 35 und 36, wobei der lichte Abstand der Seitenschenkel 21 der Breite der Kontaktschienen 28, 35 und 36 in diesem Bereich entspricht. Die Klemmkörper 19, 23 und 24 sind daher bei der Verstellung senkrecht zu den Kontaktschienen 28, 35 und 36 und den Stromsammelschienen 25, 26 und 27 unverdrehbar geführt. Am Ende der Seitenschenkel 21 der Klemmkörper 19, 23 und 24 sind rechtwinklig abstehende Klemmbacken 22 angeformt, die die im Querschnitt rechteckigen Stromsammelschienen 25, 26 und 27 hintergreifen, wie Fig. 1 zu entnehmen ist. Dabei muß die Unterseite des Adaptergehäuses 10 so gestaltet sein, daß es die dafür erforderliche seitliche Verschiebung nach dem Aufsetzen des Geräteadapters auf die Stromsammelschienen 25, 26 und 27 zuläßt. Mit dem Festziehen der Klemmschrauben 30, 33 und 34 werden die Kontaktschienen 28, 35 und 36 mechanisch fest mit den Stromsammelschienen 25, 26 und 27 verspannt und dabei elektrische Verbindungen mit kleinen Kontaktübergangswiderständen hergestellt.

Die Kontaktschienen 28, 35 und 36 sind abgewinkelt und mit seitlich versetzten Abschnitten versehen in den Bereich von Gewinderingen 37, 39 und 41 geführt, die auf der Vorderseite des Adaptergehäuses 10 befestigt sind. Wie die Fig. 2 zeigt, sind die Kontaktschienen 28, 35 und 36 dabei mit ihren Endbereichen als Mittelkontakt für die Aufnahmen ausgebildet, welche Sicherungen aufnehmen. Diese Sicherungen werden in die Schraubkappen 44, 45 und 46 eingesetzt und die Schraubkappen werden mit den Gewinderingen 37, 39 und 41 verschraubt. Die Gewinderinge 37, 39 und 41 sind im Ausführungsbeispiel im oberen Endbereich des Adaptergehäuses 10 entlang einer Längsseite angebracht, so daß links davon genügend Platz für die Klemmschrauben 30 und 33 verbleibt. Die Kontaktschienen 28, 35 und 36 sind so abgebogen und seitlich versetzt, daß sie untereinander und zu den nicht zugeordneten Stromsammelschienen isoliert sind, aber gleichzeitig für die zugeordneten Sicherungsaufnahmen als Mittelkontakte dienen. Dabei können die Kontaktschienen 28, 35 und 36 in diesen Endbereichen mit einer Gewindebohrung versehen sein, so daß an sich bekannte Sicherungseinsätze eingeschraubt werden können, die die Art der einzusetzenden Sicherungen vorgeben. Die Gewinderinge 37, 39 und 41 der Sicherungsaufnahmen sind mit Anschlußfahnen 38, 40 und 42 versehen, an denen die abisolierten Enden der Verbindungsleitungen zu den Installationsgeräten 18 mechanisch fest und elektrisch leitend angeschlossen werden können.

Im unteren Endbereich des Adaptergehäuses 10 ist auf der Vorderseite ein Abschnitt einer Tragschiene 17 befestigt, der parallel zu den Stromsammelschienen 25, 26 und 27 verläuft und sich über die gesamte Breite des Adaptegehäuses erstreckt. Die Seitenwände 15 begrenzen die Längsseiten des Adaptergehäuses 10 und tragen auf ihren Innenseiten angeformte Ansätze 16 mit Bohrungen 47. Die Tragschiene 17 kann daher mittels Schrauben 48 mit dem Adaptergehäuse 10 verschraubt werden, wobei die Schrauben 48 in Bohrungen 47 eingeschraubt werden. Dabei können selbstschneidende Schrauber 48 verwendet werden.

Der obere Endbereich des Adaptergehäuses 10 wird mittels der Abdeckung 43 abgedeckt, die aber den Zugang zu den Sicherungsaufnahmen freiläßt, so daß die Schraubkappen 44, 45 und 46 noch in die Gewinderinge 37, 39 und 41 eingeschraubt werden können. Die Oberseite der Abdeckung 43 trägt neben den Durchbrüchen für die Schraubkappen 44, 45 und 46 die Kennzeichnungsfelder 49, 50 und 51 für Kennzeichnungsstreifen oder dgl. Wie Fig. 1 zeigt, werden die Installationsgeräte 18 auf die Tragschiene 17 aufgesetzt, wobei die Halteflansche der Tragschiene 17 in Aufnahmen des Befestigungsfußes des Installationsgerätes 18 eingeführt und darin festgehalten werden. Der Geräteadapter läßt sich durch Austausch der Tragschiene 17 an alle bekannten Befestigungsarten zwischen Tragschienen und Installationsgerät anpassen. Es braucht nur ein entsprechender Abschnitt der richtigen Tragschiene verwendet zu werden.

Bei einem Sammelschienensystem können unterschiedlich dicke und unterschiedlich breite Stromsammelschienen eingesetzt sein. Um den Geräteadapter universell einsetzbar zu machen, ist nach einer weiteren Ausgestaltung vorgesehen, daß der Verstellbereich der Klemmkörper an die maximale Dicke der Stromsammelschienen des Sammelschienensystems angepaßt ist und daß das Adaptergehäuse auf seiner Unterseite im Bereich der Klemmkörper Ausnehmungen aufweist, deren Breite der maximaler Breite der Stromsammelschienen des Sammelschienensystems plus der Breite der Klemmbacken entspricht.

Soll der Geräteadapter auch für Sammelschienensysteme mit unterschiedlichen Abständen der Stromsammelschienen eingesetzt werden, dann ist darüber hinaus noch vorgesehen, daß die Klemmkörper gegenüber den Kontaktschienen verstellbar und auf unterschiedliche Abstände der Stromsammelschienen des Sammelschienensystems einstellbar sind.

## Patentansprüche

1.  Geräteadapter zum mechanischen und elektrischen Verbinden von Installationsgeräten, wie Leistungsschutzschalter, Motorschutzschalter, Schaltschütze, Relais und dgl., mit Stromsammelschienen (25,26,27) eines Sammelschienensystems, wobei die Installationsgeräte mit einem Befestigungsfuß für genormte Tragschienen (17) versehen sind, bei dem auf die Stromsammelschienen (25,26,27) ein Adaptergehäuse (10) aufsetzbar ist, in dem auf die Stromsammelschienen (25,26,27) ausgerichtet, jeweils eine Kontaktschiene (28,35,36) mittels eines mit einer Klemmschraube (30,33,34) senkrecht zu den Stromsammelschienen (25,26,27) verstellbaren Klemmkörpers (19,23,24) festgelegt ist, wobei die Klemmschrauben (30,33,34) von der Vorderseite des Adaptergehäuses (10) aus betätigbar sind, bei dem mit den Klemmkörpern (19,23,24) die Kontaktschienen (28,35,36) mit den Stromsammelschienen (25,26,27) mechanisch verspannbar und elektrisch leitend verbindbar sind und bei dem die Vorderseite des Adaptergehäuses (10) einen Abschnitt einer Trägerschiene (17) trägt,

dadurch gekennzeichnet,

daß die Kontaktschienen (28,35,36) als Mittelkontakt von Aufnahmen für mittels Schraubkappen (44,45,46) gehaltene Sicherungen geführt sind, die mittels auf der Vorderseite des Adaptergehäuses (10) befestigten Gewinderingen (37,39,41) vervollständigt sind,

daß die Tragschiene (17) außerhalb dieser Aufnahmen mit der Vorderseite des Adaptergehäuses (10) verbunden ist,

daß das Adaptergehäuse (10) eine Gehäuseplatte (11) aufweist, die auf der den Stromsammelschienen (25,26,27) zugekehrten Unterseite Befestigungsblöcke (12,13,14) zum Anschrauben der Kontaktschienen (28,35,36) trägt,

daß die Klemmschrauben (30,33,34) in Gewindebohrungen der Querstege (20) der Klemmkörper (19,23,24) verstellbar sind und diese durchqueren und

daß die den Kontaktschienen (28,35,36) zugekehrten Enden (32) der Klemmschrauben (30,33,34) frei drehbar, jedoch unverlierbar in Bohrungen der Kontaktschienen (28,35,36) gehalten sind.

2.  Geräteadapter nach Anspruch 1,
    dadurch gekennzeichnet,
    daß das Adaptergehäuse (10) quer zu den Stromsammelschienen (25,26,27) seine Längsabmessung aufweist,
    daß die Kontaktschienen (28,35,36) abgewinkelt sind und/oder seitlich versetzte Abschnitte aufweisen und mit den freien, die Mittelkontakte der Aufnahmen für mittels der Schraubkappen (44,45,46) gehaltenen Sicherungen bildenden Enden in den einen Endbereich der Längsabmessung des Adaptergehäuses (10) geführt sind,
    daß die Gewinderinge (37,39,41) der Aufnahmen in diesem Endbereich des Adaptergehäuses (10) seitlich angeordnet sind, und
    daß die Tragschiene (17) in dem entgegengesetzten, freien Endbereich des Adaptergehäuses (10) mit dessen Vorderseite verbunden ist und sich in Längsrichtung der Stromsammelschienen (25,26,27) über die gesamte Breite des Adaptergehäuses (10) erstreckt.

3.  Geräteadapter nach Anspruch 1 oder 2,
    dadurch gekennzeichnet,
    daß die Tragschiene (17) lösbar mit der Vorderseite des Adaptergehäuses (10) verbunden ist.

4.  Geräteadapter nach einem der Ansprüche 1 bis 3,
    dadurch gekennzeichnet,
    daß die Kontaktschienen (28,35,36) im Bereich der Aufnahmen für die mittels der Schraubkappen (44,45,46) gehaltenen Sicherungen mit Gewindebohrungen für einschraubbare Sicherungseinsätze versehen sind.

5.  Geräteadapter nach einem der Ansprüche 1 bis 4,
    dadurch gekennzeichnet,
    daß die Gewinderinge (37,39,41) mit Anschlußfahnen (38,40,42) für abgehende Leitungen versehen sind.

6.  Geräteadapter nach einem der Ansprüche 1 bis 5,
    dadurch gekennzeichnet,
    daß die Vorderseite des Adaptergehäuses (10) im Endbereich mit den Aufnahmen für die mittels der Schraubkappen (44,45,46) gehaltenen Sicherungen mittels einer Abdeckung (43) abgedeckt ist, die den Zugang zu den Gewinderingen (37,39,41) für die Schraubkappen (44,45,46) freiläßt.

7.  Geräteadapter nach einem der Ansprüche 1 bis 6,
    dadurch gekennzeichnet,
    daß die Tragschiene (17) im Querschnitt U-förmig ausgebildet ist, wobei die freien Enden der Seitenschenkel nach außen abgewinkelt sind, und
    daß die abgewinkelten Enden der Seitenschenkel in Ausnehmungen im Befestigungsfuß der Installationsgeräte (18) eingeführt und darin gehalten sind.

8.  Geräteadapter nach einem der Ansprüche 1 bis 7,
    dadurch gekennzeichnet,
    daß der Verstellbereich der Klemmkörper (19,23,24) an die maximale Dicke der Stromsammelschienen (25,26,27) des Sammelschienensystems angepaßt ist, und
    daß das Adaptergehäuse (10) auf seiner Unterseite im Bereich der Klemmkörper (19,23,24) Ausnehmungen aufweist, deren Breite der maximalen Breite der Stromsammelschienen (25,26,27) des Sammelschienensystems plus der Breite der Klemmbacken (22) entspricht.

9. Geräteadapter nach Anspruch 8, dadurch gekennzeichnet, daß die Klemmkörper (19,23,24) gegenüber den Kontaktschienen (28,35,36) verstellbar und auf unterschiedliche Abstände der Stromsammelschienen (25,26,27) des Sammelschienensystems einstellbar sind.

**Claims**

1. Appliance adapter for the electrical and mechanical connection of installation appliances such as power breaker, motor circuit-breakers, contactors, relays and similar, with busbars (25,26,27) of a busbar system, wherein the installation applicances are provided with a fixing base for standardized supporting bars (17), wherein an adapter housing (10) can be mounted onto the busbars (25,26,27), in which with direction to the busbars (25,26,27) a contact rail (28,35,36) is located by means of a clamping element (19,23,24) adjustable vertically to the busbars (25,26,27), wherein the clamping screws (30,33,34) can be controlled from the front side of the adapter housing (10) in which the contact rails (28,35,36) can be mechanically clamped and electrically conductively connected with the busbars by means of the clamping elements (19,23,24) and wherein the front side of the adapter housing (10) bears a section of a supporting bar (17), characterized thereby, that the contact rails (28,35,36) are guided as centre contact of locations for fuses fixed by means of screw caps (44,45,46), which are completed by means of threaded rings (37,39,41) fixed on the front side of the adapter housing (10), that the supporting bar (17) is, outside of these locations, connected with the front side of the adapter housing (10), that the adapter housing (10) is provided with a housing plate (11) which bears on the lower side orientated towards the busbars (25,26,27), fastening blocks (12,13,14) for screwing-on the contact rails (28,35,36), that the clamping screws (30,33,34) are adjustably mounted in threaded holes of the traverses (20) of the clamping elements (19,23,24) and protude them and that the end pieces (32) of the clamping screws (30,33,34) orientated towards the contact rails (28,35,36) are rotatably, but captively mounted within the holes of the contact rails (28,35,36).

2. Appliance adapter according to claim 1, characterized thereby, that the adapter housing (10) has his longer side crosswise to the busbars (25,26,27), that the contact rails (28,35,36) are U-bent and/or provided with laterally offset sections and with the free ends shaping the centre contacts of the locations for fuses fixed by means of the screw caps (44,45,46), are introduced into one end area of the adapter housing (10) of the longer side of the adapter housing (10), that the threaded rings (37,39,41) of the locations are laterally located in that end area, and that the supporting bar (17) is connected in the opposite, free end area of the adapter housing, with its front side and extends over the whole width of the adapter housing (10) in the longitudinal direction of the busbars (25,26,27).

3. Appliance adapter according to claim 1 or 2, characterized thereby, that the supporting bar (17) is detachably connected with the front side of the adapter housing (10).

4. Appliance adapter according to one of the claims 1 to 3, characterized thereby, that the contact rails (28,35,36) in the area of the locations of the fuses fixed by means of the screw caps (44,45,46) are provided with threaded holes for screwable fuse-links.

5. Appliance adapter according to one of the claims 1 to 4, characterized thereby, that the threaded rings (37,39,41) are provided with connection lugs (38,40,42) for outgoing feeders.

6. Appliance adapter according to one of the claims 1 to 5, characterized thereby, that the front side of the adapter housing (10) in its end area with the locations for the fuses fixed by means of the screw caps (44,45,46) is covered by means of a cover (43) giving free access to the treaded rings (37,39,41) for the screw caps (44,45,46).

7. Appliance adapter according to one of the claims 1 to 6, characterized thereby, that the supporting bar (17) has an U shaped, wherein the free ends of the sides are bent outwards, and that the bent ends of the sides are introduced in recesses located in the fastening base of the appliances (18) and held in them.

8. Appliance adapter according to one of the claims 1 to 7,
characterized thereby,
that the regulation scope of the clamping elements (19,23,24) is matched to the maximum thickness of the busbars (25,26,27) of the busbar system, and
that the appliance adapter (10) is on its lower side provided with recesses in the area of the clamping elements (19,23,24), the width of which corresponds to tthe maximum width of the busbars (25,26,27) of the busbar system plus the width of the clamping jaws (22).

9. Appliance adapter according to claim 8,
characterized thereby,
that the clamping elements (19,23,24) are adjustable in relation to the contact bars (28,35,36) and adjustable to different distances of the busbars (25,26,27) of the busbar system.

**Revendications**

1. Adaptateur pour la connexion mécanique et électrique d'appareils d'installation tels qu'interrupteurs automatiques, coffrets de protection, contacteurs, relais et similaires, avec des barres conductrices (25,26,27) d'un système de barres conductrices, où les appareils d'installation sont munis d'une embase de fixation pour des barres d'appui standardisées (17) et un coffret d'adaptateur (10) peut être monté sur les barres conductrices (25,26,27) dans lequel est prévu un rail de contact (28,35,36) orienté vers les barres conductrices (25,26,27) et fixé au moyen d'un élément de serrage (19,23,24) réglable verticalement aux barres conductrices (25,26,27) à l'aide d'une vis de serrage (30,33,34), où les vis de serrage (30,33,34) peuvent être réglées par devant du coffret d'adaptateur (10) dans lequel les rails de contact (28,35,36) sont conductiblement reliables et mécaniquement serrables aux barres conductrices (25,26,27) au moyen des éléments de serrage (19,23,24) et le côté avant du coffret d'adaptateur (10) porte une partie d'une barre d'appui (17),
caractérisé en ce
que les rails de contact (28,35,36) sont guidés en tant que contact central des logements de fusibles supportés par des bouchons porte-fusibles (44,45,46), qui sont complétés par des bagues filetées (37,39,41) fixées sur la face du coffret d'adaptateur (10),
que la barre d'appui (17) est reliée à la face du coffret d'adaptateur (10) en dehors de ces logements,
que le coffret d'adaptateur (10) est équipé d'une plaque (11) munie de blocs de fixations (12,13,14) du côté inférieur orienté aux barres conductrices (25,26,27) servant au vissage des rails de contact (28,35,36),
que les vis de serrage (30,33,34) sont réglables dans des trous taraudés des traverses (20) des éléments de serrage (19,23,24) et les traversent et
que les extrémités (32) des vis de serrage (30,33,34) orientées aux barres de contact (28,35,36) sont librement rotatives, mais retenues imperdables dans les alésages des barres de contact (28,35,36).

2. Adaptateur selon la revendication 1,
caractérisé en ce
que le coffret d'adaptateur (10) a son côté longitudinal en travers par rapport aux barres conductrices (25,26,27);
que les barres de contact (28,35,36) sont coudées et/ou munies de parties latéralement décalées et ses extrémités libres servant de contacts centraux des logements des fusibles fixés par des bouchons porte-fusibles (44,45,46), entrent dans la partie finale du côté longitudinal du coffret d'adaptateur (10),
que les bagues filetées (37,39,41) des logements sont placées latéralement par rapport à cette partie finale du coffret d'adaptateur (10), et
que la barre d'appui (17) est reliée au côté avant du coffret d'adaptateur (10) dans la partie libre opposée et s'étend en direction longitudinale aux barres conductrices (25,26,27) sur toute la largeur du coffret d'adaptateur (10).

3. Adaptateur selon les revendications 1 et 2,
caractérisé en ce
que la barre d'appui (17) est reliée amoviblement au côté frontal du coffret d'adaptateur (10).

4. Adaptateur selon l'une des revendications de 1 à 3,
caractérisé en ce
que dans la région des logements des fusibles retenus par les bouchons porte-fusibles (44,45,46), les barres de contact (28,35,36) sont munies d'alésages taraudés pour visser des cartouches fusibles.

5. Adaptateur selon l'une des revendications de 1 à 4,
caractérisé en ce

que les bagues filetées (37,39,41) sont équipées de talons de raccord (38,40,42) de lignes de départ.

6.   Adaptateur selon l'une des revendications de 1 à 5,
caractérisé en ce
que la face du coffret d'adaptateur (10) est recouverte d'un recouvrement (43) dans sa région finale avec les logements destinés aux fusibles retenues par les bouchons porte-fusibles (44,45,46?), offrant l'accès libre aux bagues filetées (37,39,41) pour les dits bouchons (44,45,46).

7.   Adaptateur selon l'une des revendications de 1 à 6,
caractérisé en ce
que la barre d'appui (17) est en forme d'U où les extrémités libres des côtés latéraux sont coudées vers l'extérieur et
que les extrémités coudées des côtés sont introduites et retenues dans des encoches prévues dans l'embase de fixation des appareils d'installation (18).

8.   Adaptateur selon l'une des revendications de 1 à 7
caractérisé en ce
que le domaine de réglage des éléments de serrage (19,23,24) est adapté à l'épaisseur maximale des barres conductrices (25,26,27) du système de barres conductrices, et
que le coffret d'adaptateur (10) est muni d'encoches de son côté inférieur dans la partie des éléments de serrage (29,23,24), dont la largeur correspond à la largeur maximale des barres conductrices (25,26,27) du système de barres conductrices, plus la largeur des mâchoirs de serrage (22).

9.   Adaptateur selon la revendication 8,
caractérisé en ce
que les éléments de serrage (19,23,24) sont réglables par rapport aux ras de contact (28,35,36) et ajustables aux distances différentes par rapport aux barres conductrices (25,26,27) du système de barres conductrices.

FIG.1

FIG.2

FIG.3